# EUROPEAN PATENT APPLICATION

(11) **EP 4 075 572 A2**
(43) Date of publication of application: **19.10.2022**
(21) Application number: 22168267.7
(22) Date of filing: 13.04.2022
(51) Int. Cl.: H01M 10/613, H01M 10/625, H01M 10/647, H01M 10/6556, H01M 50/211, H01M 50/242, H01M 50/383

(54) **BATTERY PACK AND METHOD OF MANUFACTURING THE SAME**

(30) Priority: 15.04.2021 KR 20210049406
(71) Applicant: SK On Co., Ltd., Seoul 03188 (KR)
(72) Inventor: PARK, Chan Ho, 34124 Daejeon (KR); KWON, Dae Won, 34124 Daejeon (KR); JANG, Jin A, 34124 Daejeon (KR)
(74) Representative: Stolmár & Partner Patentanwälte PartG mbB

(57) **Abstract**

A battery pack includes a cell unit including one or more battery cells, a cell accommodating member accommodating a plurality of the cell units, and a housing surrounding at least a portion of an outer periphery of the cell accommodating member. The cell accommodating member includes a first accommodating portion accommodating the cell unit and having one open side, and a second accommodating portion provided in plural and having the other open side. The second accommodating portion is disposed between the first accommodating portions adjacent to each other to separate the first accommodating portions from each other.

## Description

### CROSS-REFERENCE TO RELATED APPLICATION

This application claims the benefit under 35 USC 119(a) of Korean Patent Application No. 10-2021-0049406 filed on April 15, 2021 in the Korean Intellectual Property Office, the entire disclosure of which is incorporated herein by reference for all purposes.

### BACKGROUND

### 1. FIELD

The present disclosure relates to a battery pack equipped with a plurality of battery cells and a method of manufacturing the same, and more particularly, to a battery pack in which energy density may be increased within the same accommodation space by proposing a battery pack structure into which battery cells are directly inserted, instead of a battery module structure of the related art, and a method of manufacturing the same. However, the embodiment of the present disclosure is not limited to the battery pack and may also be applied to a battery module.

### 2. DESCRIPTION OF RELATED ART

Secondary batteries, unlike primary batteries, have the convenience of being able to be charged and discharged, and are attracting attention as the power sources of various mobile devices and power sources for electric vehicles. For example, a secondary battery of the type using a high energy density non-aqueous electrolyte has relatively good output and is used to drive a motor of an electric vehicle by connecting a plurality of secondary batteries in series.

Battery modules applied to electric vehicles are modularized by electrically connecting a plurality of battery cells due to the need for high output and high capacity, and the electric vehicle includes a battery pack in which a plurality of these battery modules are arranged to obtain high power.

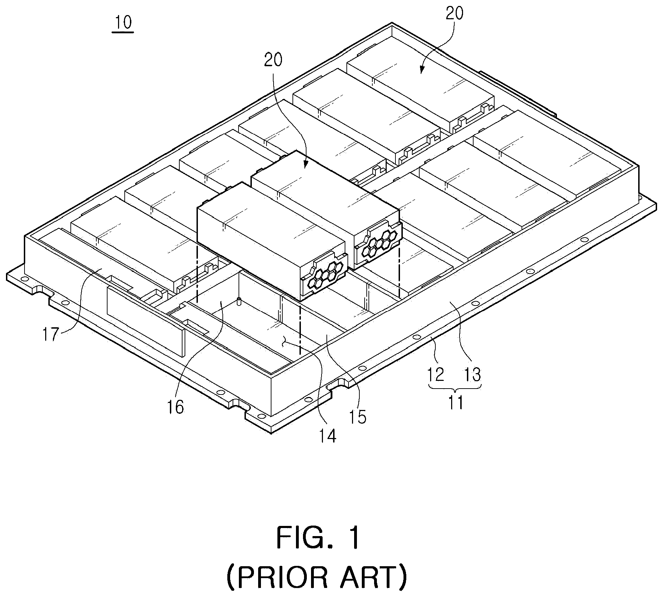

FIG. 1 illustrates an example of a battery pack 10 according to the related art.

Referring to FIG. 1, the battery pack 10 according to the related art includes a plurality of battery modules 20 in an accommodating space 14 formed inside a pack housing 11, and an electric component 17 such as a battery management system (BMS) or the like.

The battery module 20 has a structure in which a plurality of battery cells (not illustrated) are provided inside a module housing, and the plurality of battery cells (not illustrated) are electrically connected through a bus bar assembly (not illustrated) or the like, to form a module structure.

The battery pack 10 according to the related art has a partition wall structure to secure the structural rigidity of the pack housing 11. For example, as illustrated in FIG. 1, the pack housing 11 may include a cross member 16 protruding from a bottom 12 of the pack housing 11 while traversing the bottom 12 as a whole so as to connect opposing sidewalls 13 of the pack housing 11, and a partition wall 15 formed to protrude from the bottom 12 of the pack housing 11 in the form of connecting the cross member 16 and the sidewall 13. In this manner, in the battery pack 10 of the related art, the cross member 16 and the partition wall 15 form a grid to secure the structural rigidity of the pack housing 11.

In this case, the accommodating space 14 for accommodating the battery module 20 should be secured as a separation space greater than or equal to the size of the actual battery module 20 should, in consideration of securing a space capable of absorbing the assembly tolerance of the battery module 20 and swelling occurring in the battery cells inside the battery module 20. For example, a gap is formed between the partition wall 15 and the outer surface of the module housing.

As such, in the battery pack 10 according to the related art, an empty space not used for mounting the battery cell, for example, dead space, is generated due to the gap between the partition wall 15 and the outer surface of the module housing. This dead space greatly increases as the number of battery modules 20 increases.

Accordingly, in the battery pack 10 according to the related art, as the number of the battery modules 20 provided therein increases, the module components constituting the battery module 20, a support structure for supporting the battery module 20, and dead space increase, and thus, there is a problem in that a space in which a battery cell (not illustrated) may be provided may not be sufficiently secured. For example, the battery pack 10 according to the related art has a problem in that the energy density of the battery pack 10 cannot be sufficiently increased.

In addition, in the battery pack 10 according to the related art, since a module housing having sufficient thickness and rigidity is installed to support the battery cell (not illustrated) as described above, a heat transfer path from the lower surface of the battery cell (not illustrated) externally is complicated, and there may be a problem in which heat dissipation and cooling performance thereof are deteriorated due thereto.

Also, the battery pack 10 according to the related art has a problem in that it does not sufficiently block the propagation of heat or flames generated in one battery cell or battery module to other battery cells.

### SUMMARY

This Summary is provided to introduce a selection of concepts in simplified form that are further described below in the Detailed Description. This Summary is not intended to identify key features or essential features of the claimed subject matter, nor is it intended to be used as an aid in determining the scope of the claimed subject matter.

An aspect of the present disclosure is to provide a battery pack in which relatively more battery cells may be mounted in the same accommodation space and thus energy density may be increased, and a method of manufacturing the same.

An aspect of the present disclosure is to provide a battery pack in a form that is structurally more stable by accommodating battery cells directly in a cell accommodating member to reduce the number of components constituting the battery pack, and a method of manufacturing the same.

An aspect of the present disclosure is to provide a battery pack in which a battery cell may be accommodated in a cell accommodating member having a plurality of accommodating portions to stably support the battery cell while maintaining a constant temperature of the battery cell, and a method of manufacturing the same.

In addition, an aspect of the present disclosure is to provide a battery pack in which a dangerous situation (e.g., a thermal runaway situation) occurring in one accommodating portion may be prevented from propagating to an adjacent accommodating portion by spatially separating the accommodating portions in which the battery cells are accommodated, and a method of manufacturing the same.

An aspect of the present disclosure is to provide a battery pack capable of improving the cooling efficiency of a battery cell and a method of manufacturing the same.

According to an aspect of the present disclosure, a battery pack includes a cell unit including one or more battery cells, a cell accommodating member accommodating a plurality of the cell units, and a housing surrounding at least a portion of an outer periphery of the cell accommodating member. The cell accommodating member includes a first accommodating portion accommodating the cell unit and having one open side, and a second accommodating portion provided in plural and having the other open side. The second accommodating portion is disposed between the first accommodating portions adjacent to each other to separate the first accommodating portions from each other.

The first accommodating portion and the second accommodating portion of the cell accommodating member may be formed by bending a single plate member a plurality of times, and the cell accommodating member may be formed of a metal material or a thermally conductive plastic.

The second accommodating portion may accommodate a heat propagation preventing member to block heat propagation between the plurality of cell units accommodated in the first accommodating portion. The heat propagation preventing member may include at least one of mica, silicate, graphite, or alumina.

The first accommodating portion of the cell accommodating member may have an open lower side, open to surround an upper portion and both sides of the cell unit, and the second accommodating portion may have an open upper side.

A width of the first accommodating portion may be wider than a width of the second accommodating portion. Alternatively, the first accommodating portion may further include a partition wall dividing the first accommodating portion into at least two spaces.

The housing may include a first housing disposed below the cell accommodating member and a second housing disposed on an upper portion of the cell accommodating member. The lower side of the first accommodating portion may be closed by the first housing.

A lower surface of the second accommodating portion may be fixed to the housing to separate the first accommodating portions adjacent to each other. In addition, an upper surface of the second accommodating portion may be covered with the second housing.

The cell unit may be provided by stacking a plurality of battery cells, for example, by stacking a plurality of pouch-type battery cells. In addition, a stacking direction of the battery cells may be a direction perpendicular to a side surface of the first accommodating portion.

The battery cell may be a pouch-type battery cell having a three-sided sealing structure, including a bending portion in which an exterior material is folded and a sealing portion in which the exterior material is sealed, and the bending portion of the battery cell may be disposed the lower side of the first accommodating portion.

The battery pack may include a bus bar assembly disposed on an end of the cell unit in a longitudinal direction and electrically connecting the plurality of the cell units to each other.

The cell unit may be accommodated in the first accommodating portion through a heat transfer member. The heat transfer member may be disposed between the cell unit and the first housing. Alternatively, the heat transfer member may be disposed between the cell unit and an upper surface of the first accommodating portion.

The battery pack may further include a cooling portion disposed in at least one of an inner portion or an outer surface of the housing. Alternatively, the cooling portion may be provided inside the first housing or may be provided outside the first housing.

According to an aspect of the present disclosure, a battery pack includes a cell unit including one or more battery cells, a cell accommodating member accommodating a plurality of the cell units, and a housing surrounding at least a portion of an outer periphery of the cell accommodating member. The cell accommodating member includes a first accommodating portion disposed on one surface of the cell accommodating member and extending in a first direction corresponding to a longitudinal direction of the battery cell to accommodate the cell unit therein, and a second accommodating portion provided in plural, disposed on the other surface of the cell accommodating member, and extending in the first direction. A plurality of the first accommodating portions and a plurality of the second accommodating portions are alternately arranged in a second direction, intersecting the first direction, and the second accommodating portion is located between the first accommodating portions adjacent to each other, and separating the first accommodating portions from each other.

The cell unit may be provided by stacking, in a second direction, one or more battery cells aligned in a first direction.

An aspect of the present disclosure, a method of manufacturing a battery pack includes preparing a cell unit including one or more battery cells, preparing a cell accommodating member including a first accommodating portion having one open side and a second accommodating portion having the other open side, accommodating the cell unit in the first accommodating portion, covering the first accommodating portion with a first housing, electrically connecting the cell unit to a bus bar assembly, and coupling the first housing and a second housing.

The method of manufacturing a battery pack may further include, after the covering of the first accommodating portion with the first housing, inverting the cell accommodating member coupled to the first housing, and accommodating a heat propagation preventing member in the second accommodating portion.

The accommodating of the cell unit in the first accommodating portion may further include a process of accommodating a heat transfer member in the first accommodating portion.

The covering of the first accommodating portion with the first housing may be performed to close an open portion of the first accommodating portion with the first housing.

The coupling of the first housing and the second housing may be performed to close an open portion of the second accommodating portion with the second housing.

In the method of manufacturing a battery pack according to embodiments, the cell accommodating member may be formed by bending a single plate in a zigzag shape a plurality of times, and may have a shape in which the first accommodating portion is provided on one surface of a bent plate and the second accommodating portion is provided on the other surface of the bent plate.

### BRIEF DESCRIPTION OF DRAWINGS

The above and other aspects, features, and advantages of the present inventive concept will be more clearly understood from the following detailed description, taken in conjunction with the accompanying drawings, in which:
FIG. 1 is a perspective view illustrating the inside of a battery pack according to the related art;
FIG. 2 is an exploded perspective view of a battery pack according to embodiments;
FIG. 3 is an illustrative view illustrating a state in which a cell unit is accommodated in a cell accommodating member according to embodiments;
FIG. 4 is a perspective view of a battery cell according to embodiments;
FIG. 5 is a perspective view of a cell accommodating member included in a battery pack according to embodiments;
FIG. 6 is a cross-sectional view taken along line I-I' of FIG. 5;
FIG. 7 is a cross-sectional view of a battery pack according to embodiments;
FIG. 8 is a cross-sectional view of a battery pack to which a heat transfer member according to embodiments is applied;
FIG. 9 is a cross-sectional view of a battery pack provided with a cooling portion according to embodiments;
FIG. 10 is a cross-sectional view of a battery pack provided with a cooling tube according to embodiments;
FIG. 11 is a cross-sectional view of a battery pack according to embodiments;
FIG. 12 is an illustrative view of a battery pack provided with a bus bar assembly according to embodiments;
FIG. 13A is an illustrative view illustrating a state in which a cell unit is accommodated in a cell accommodating member according to embodiments;
FIG. 13B is an illustrative view of a cell accommodating member in which a cell unit is accommodated according to embodiments;
FIG. 14 is an illustrative view of a cell accommodating member to which a first housing is coupled according to embodiments;
FIG. 15A is an illustrative view illustrating a state in which a heat propagation preventing member is accommodated in a cell accommodating member according to embodiments;
FIG. 15B is an illustrative view of a cell accommodating member in which a heat propagation preventing member is accommodated according to embodiments;
FIG. 16 is an illustrative diagram illustrating a state in which a bus bar assembly according to embodiments is connected to a cell unit; and
FIG. 17 is an illustrative view illustrating a state in which a second housing is coupled to a first housing.

### DETAILED DESCRIPTION

The following detailed description is provided to assist the reader in gaining a comprehensive understanding of the methods, apparatuses, and/or systems described herein. However, various changes, modifications, and equivalents of the methods, apparatuses, and/or systems described herein will be apparent to one of ordinary skill in the art. The sequences of operations described herein are merely examples, and are not limited to those set forth herein, but may be changed as will be apparent to one of ordinary skill in the art, with the exception of operations necessarily occurring in a certain order. Also, descriptions of functions and constructions that would be well known to one of ordinary skill in the art may be omitted for increased clarity and conciseness.

The features described herein may be embodied in different forms, and are not to be construed as being limited to the examples described herein. Rather, the examples described herein have been provided so that this disclosure will be thorough and complete, and will fully convey the scope of the disclosure to one of ordinary skill in the art.

Herein, it is noted that use of the term "may" with respect to an embodiment or example, e.g., as to what an embodiment or example may include or implement, means that at least one embodiment or example exists in which such a feature is included or implemented while all examples and examples are not limited thereto.

Throughout the specification, when an element, such as a layer, region, or substrate, is described as being "on," "connected to," or "coupled to" another element, it may be directly "on," "connected to," or "coupled to" the other element, or there may be one or more other elements intervening therebetween. In contrast, when an element is described as being "directly on," "directly connected to," or "directly coupled to" another element, there can be no other elements intervening therebetween.

As used herein, the term "and/or" includes any one and any combination of any two or more of the associated listed items.

Although terms such as "first," "second," and "third" may be used herein to describe various members, components, regions, layers, or sections, these members, components, regions, layers, or sections are not to be limited by these terms. Rather, these terms are only used to distinguish one member, component, region, layer, or section from another member, component, region, layer, or section. Thus, a first member, component, region, layer, or section referred to in examples described herein may also be referred to as a second member, component, region, layer, or section without departing from the teachings of the examples.

Spatially relative terms such as "above, " "upper, " "below, " and "lower" may be used herein for ease of description to describe one element's relationship to another element as illustrated in the figures. Such spatially relative terms are intended to encompass different orientations of the device in use or operation in addition to the orientation depicted in the figures. For example, if the device in the figures is turned over, an element described as being "above" or "upper" relative to another element will then be "below" or "lower" relative to the other element. Thus, the term "above" encompasses both the above and below orientations depending on the spatial orientation of the device. The device may also be oriented in other manners (for example, rotated 90 degrees or at other orientations), and the spatially relative terms used herein are to be interpreted accordingly.

The terminology used herein is for describing various examples only, and is not to be used to limit the disclosure. The articles "a," "an," and "the" are intended to include the plural forms as well, unless the context clearly indicates otherwise. The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

Due to manufacturing techniques and/or tolerances, variations of the shapes illustrated in the drawings may occur. Thus, the examples described herein are not limited to the specific shapes illustrated in the drawings, but include changes in shape occurring during manufacturing.

The features of the examples described herein may be combined in various manners as will be apparent after gaining an understanding of the disclosure of this application. Further, although the examples described herein have a variety of configurations, other configurations are possible as will be apparent after gaining an understanding of the disclosure of this application.

The drawings may not be to scale, and the relative sizes, proportions, and depiction of elements in the drawings may be exaggerated for clarity, illustration, and convenience.

In addition, in the present specification, expressions of upper side, upper portion, lower side, lower portion, side, side surface, front side, rear side, and the like are represented based on the direction illustrated in the drawings, and therefore, it may be expressed differently if the direction of the corresponding object is changed.

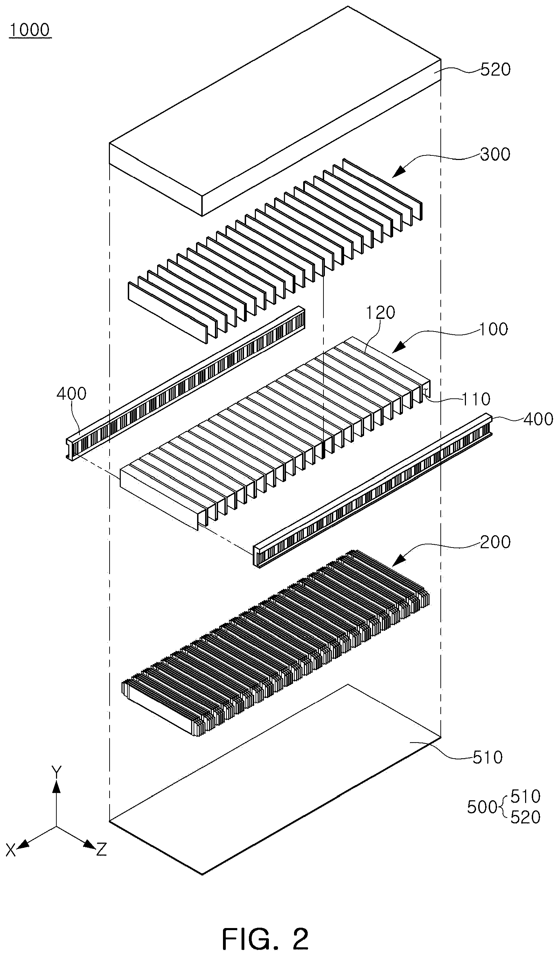

FIG. 2 is an exploded perspective view of a battery pack 1000 according to embodiments.

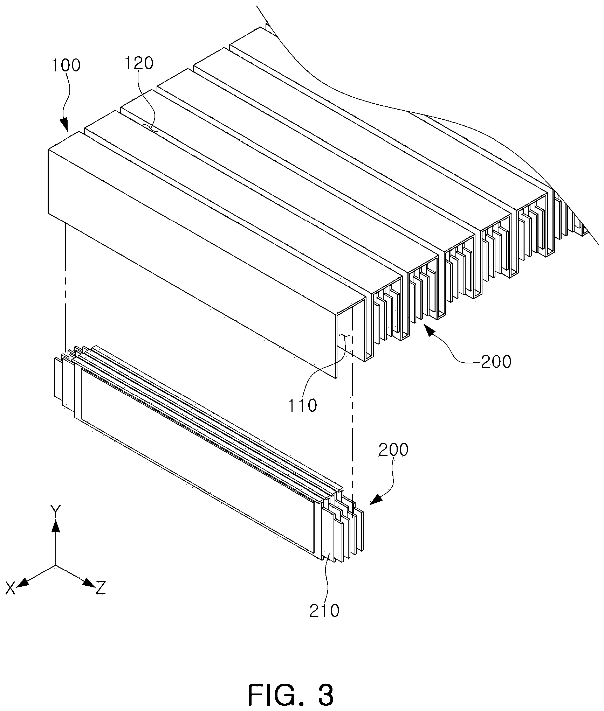

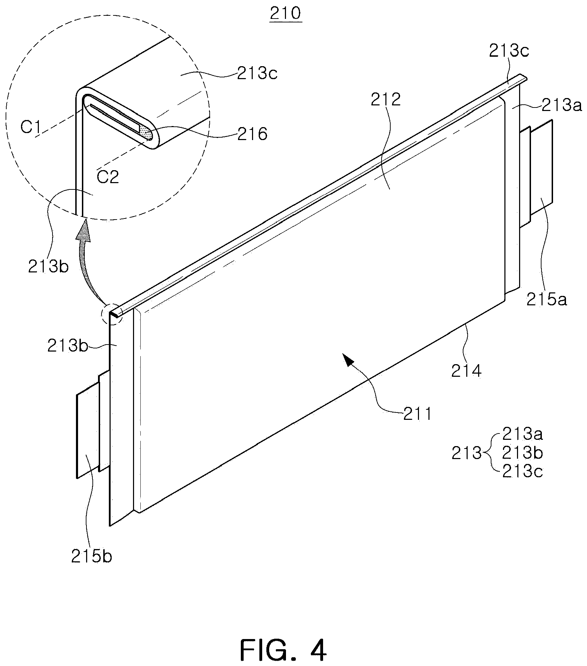

The battery pack 1000 according to embodiments includes a cell unit 200 including one or more battery cells 210 (refer to FIGS. 3 and 4), a cell accommodating member 100 accommodating a plurality of the cell units 200, and a housing 500 surrounding at least a portion of the outer periphery of the cell accommodating member 100. The plurality of cell units 200 may be accommodated in the cell accommodating member 100. For example, as illustrated in FIG. 2, the cell accommodating member 100 may include a plurality of accommodating portions 110 in which one cell unit 200 may be accommodated, respectively. In addition, the cell accommodating member 100 may further include a heat propagation preventing member 300. The cell accommodating member 100 may include a plurality of accommodating portions 120 in which one heat propagation preventing member 300 may be accommodated, respectively. In the cell accommodating member 100, the space in which the heat propagation preventing member 300 is accommodated and the space in which the cell unit 200 is accommodated may be different from each other. For example, as illustrated in FIG. 2, the cell accommodating member 100 may include a plurality of first accommodating portions 110 accommodating the plurality of cell units 200 and a plurality of second accommodating portions 120 accommodating the plurality of heat propagation preventing members 300, respectively. The heat propagation preventing member 300 prevents the heat and/or flame and gas generated in one cell unit 200 from propagating to adjacent cell units 200 or other members inside the battery pack 1000. The plurality of cell units 200 accommodated in the cell accommodating member 100 may be electrically connected to each other through bus bar assemblies 400. For example, the bus bar assemblies 400 may be electrically connected to electrode tabs 215a and 215b of the battery cell (210 in FIG. 4) to electrically connect the plurality of cell units 200 in series and/or in parallel. The housing 500 may surround at least a portion of the cell accommodating member 100 to separate the cell accommodating member 100 from the external environment. The housing 500 may be provided as a plurality of sub-housings 510 and 520. For example, as illustrated in FIG. 2, the housing 500 may include a first housing 510 that may cover a lower side of the cell accommodating member 100 and a second housing 520 that may cover an upper side of the cell accommodating member 100. At least one of the first housing 510 or the second housing 520 may have a structure in which the terminal of the bus bar assembly 400 electrically connecting the cell units 200 accommodated in the cell accommodating member 100 is exposed externally. The first housing 510 and the second housing 520 may contact each other to form an exterior of the battery pack 1000, and may protect the cell units 200 accommodated in the cell accommodating member 100 from the external environment.

As illustrated in FIG. 2, the battery pack 1000 according to embodiments may have a structure in which the cell unit 200 in which the plurality of battery cells (e.g., 210 in FIGS. 3 and 4) are stacked is directly inserted into the housing 500, without interposing a module housing. Since the battery cells (210 in FIG. 4) are installed directly inside the battery pack 1000 without a battery module structure, the battery pack 1000 may be configured without required components in the existing battery module structure. For example, components such as a module housing included in the existing battery module structure may be omitted, and a dead space inevitably generated in the battery module structure may be eliminated. In addition, since the internal structure of the battery pack 1000 according to embodiments is simpler than that of the battery pack 1000 of the related art including the battery module, structural stability and electrical stability may be improved.

With reference to FIGS. 3 to 4, the battery cell 210 included in the battery pack (e.g., 1000 in FIG. 2) according to embodiments and the cell unit 200 including one or more battery cells 210 will be described below. The cell unit 200 to be described below corresponds to the cell unit 200 described above with reference to FIG. 2.

FIG. 3 is an illustrative view illustrating a state in which the cell unit 200 is accommodated in the cell accommodating member 100 according to embodiments.

A battery pack (e.g., 1000 in FIG. 2) according to embodiments includes a plurality of cell units 200. The plurality of cell units 200 are accommodated in the first accommodating portion 110 of the cell accommodating member 100. For example, as illustrated in FIG. 3, one cell unit 200 may be accommodated in one first accommodating portion 110. However, this is only an example, and for example, two or more cell units 200 may be accommodated in one first accommodating portion 110.

Hereinafter, a detailed configuration of one cell unit 200 will be described. However, since the description of one cell unit 200 may be equally applied to the other cell units accommodated in the first accommodating portion 110, overlapping descriptions will be omitted.

The cell unit 200 may include one or more battery cells 210 illustrated in FIG. 4 as an example. For example, the cell unit 200 may be configured by stacking a plurality of battery cells (210 in FIG. 4) . In this case, the plurality of battery cells 210 may be stacked such that the side surfaces thereof are in contact with each other, respectively. Double-sided tape (not illustrated) may be provided between facing sides of the neighboring battery cells 210 to fix the neighboring battery cells 210. Also, a buffer pad for absorbing the expansion pressure of the battery cell 210 when a swelling phenomenon occurs in the battery cell 210 may be installed between at least some of the neighboring battery cells 210.

In embodiments, the cell unit 200 may be configured by stacking a plurality of battery cells 210 in any one direction (e.g., the X-axis direction of FIG. 3) as illustrated in FIG. 3. The stacking direction of the battery cells may be a direction intersecting the longitudinal direction of the battery cells. Alternatively, the stacking direction of the battery cells may be a direction in which the first accommodating portion and the second accommodating portion of the cell accommodating member are aligned to intersect each other. However, the stacking direction of the battery cells is not limited to the above-described direction, and the plurality of battery cells 210 may also be configured to be stacked in another direction (e.g., the Y-axis direction of FIG. 3) if necessary.

In FIG. 3, four battery cells 210 are stacked to form one cell unit 200, but this is only an example, and thus, one cell unit 200 may be formed by stacking three or less or five or more battery cells 210.

The plurality of battery cells 210 provided in the cell unit 200 according to embodiments may be pouch-type secondary batteries as illustrated in FIG. 4. Hereinafter, one battery cell 210 included in the cell unit 200 will be described. However, since the description of one battery cell 210 may be equally applied to other battery cells included in the cell unit body 200, the overlapping description will be omitted.

Referring to FIG. 4, the battery cell 210 formed of a pouch-type secondary battery may be configured in a form in which an electrode assembly (not illustrated) is accommodated in a pouch 211. The electrode assembly includes a plurality of internal electrode plates (not illustrated) and internal electrode tabs (not illustrated), and is accommodated in the pouch 211. In this case, the internal electrode plate is comprised of a positive electrode plate (not illustrated) and a negative electrode plate (not illustrated), and the electrode assembly may be configured in the form in which the positive electrode plate and the negative electrode plate are stacked with a separator (not illustrated) interposed therebetween such that relatively wide surfaces of the positive and negative plates face each other. The positive and negative plates are formed to have a structure in which an active material slurry is applied to a current collector, and the slurry is typically formed by stirring a granular active material, an auxiliary conductor, a binder, and a plasticizer in a state in which a solvent is added. Also, in the electrode assembly, a plurality of positive plates and a plurality of negative plates may be stacked in a lateral direction (or in a horizontal direction) . In this case, the plurality of positive and negative electrode plates are respectively provided with internal electrode tabs, and the internal electrode tabs may be connected to each other such that the same polarities contact each other . The internal electrode tabs having the same polarity may be electrically connected to each other to form one electrode tab (or electrode leads) 215a and 215b. For example, the plurality of internal electrode tabs provided on the plurality of positive electrode plates may be electrically connected to each other to form one electrode tab 215a. Similarly, the plurality of internal electrode tabs provided on the plurality of negative electrode plates may be electrically connected to each other to form one electrode tab (or electrode lead) 215b. In the case of the battery cell 210 illustrated in FIG. 4, the two electrode tabs 215a and 215b are illustrated as being disposed in opposite directions to each other, but may be disposed in the same direction but at different heights.

In addition, the pouch 211 is formed in the form of a container to provide an internal space in which the electrode assembly and the electrolyte (not illustrated) are accommodated. In this case, as illustrated in FIG. 4, portions of the electrode tabs 215a and 215b of the electrode assembly may be exposed externally of the pouch 211. The pouch 211 may be divided into a body portion 212, a sealing portion 213 formed on three sides of the body portion 212, and a bending portion 214.

The body portion 212 is formed in a container shape to provide an internal space of a rectangular shape. The electrode assembly and the electrolyte described above are accommodated in the internal space of the body portion 212.

In embodiments, the pouch 211 may be formed by folding a single sheet of exterior material. In detail, after forming one or two accommodating portions in one sheet of exterior material, the pouch 211 may be completed by folding the exterior material such that the accommodating portions form one space (e.g., the body portion 212 of FIG. 4) . The exterior material surrounds the body portion 212 and the folded portion forms the bending portion 214.

The sealing portion 213 is a portion to which a portion of the pouch 211 is joined to seal the circumference of the body portion 212. For example, as illustrated in FIG. 4, the battery cell 210 according to embodiments may have a sealing portion 213 on three surfaces by folding a single sheet of exterior material and joining the same on three surfaces. In this case, the sealing portion 213 on the three sides may be divided into a first sealing portion 213a on which any one electrode tab 215a is disposed, a second sealing portion 213b on which the other electrode tab 215b is disposed, and a third sealing portion 213c disposed on any one of the long sides of the battery cell 210 on which the electrode tabs 215a and 215b are not disposed. However, this is only an example, and when the two electrode tabs are disposed in the same direction, the two electrode tabs 215a and 215b may be disposed only in either the first sealing portion 213a or the second sealing portion 213b. In addition, although the third sealing portion 213c is illustrated to be formed on the upper long side of the pouch 211 in FIG. 4, the third sealing portion 213c may be formed on the lower long side of the pouch 211 of FIG. 4. The sealing portion 213 is formed in the form of a flange extending outwardly from the body portion 212 formed in the shape of a container, and is disposed along the outer edge of the body portion 212. A heat-sealing method may be used for bonding the pouch 211 to form the sealing portion 213, but is not limited thereto.

On the other hand, the pouch 211 used in the embodiments is not limited to a structure in which the sealing portion 213 is formed on three sides by folding a sheet of exterior material as illustrated in FIG. 4. For example, the body portion 212 may also be formed by overlapping two different exterior materials, and the sealing portion 213 may be formed on all four sides around the body portion 212. For example, the sealing portion 213 may be formed of a sealing portion on two sides on which the electrode tabs 215a and 215b are disposed, and a sealing portion on the other two sides on which the electrode tabs 215a and 215b are not disposed.

In addition, in the battery cell 210, a portion of the sealing portion 213 may be formed in a folded shape folded at least once to increase the bonding reliability of the sealing portion 213 and significantly reduce the area of the sealing portion 213. For example, as illustrated in FIG. 4, the third sealing portion 213c in which the electrode tabs 215a and 215b are not disposed in the sealing portion 213 may be fixed by an adhesive member 216 after being folded twice or more. For example, the third sealing portion 213c may be folded by 180° along a first bending line C1 and then folded once again along a second bending line C2. At this time, the inside of the third sealing portion 213c may be filled with the adhesive member 216, and the third sealing portion 213c may be maintained in a shape folded a plurality of times by the adhesive member 216. The adhesive member 216 may be formed of an adhesive having relatively high thermal conductivity. For example, the adhesive member 216 may be formed of epoxy or silicone, but is not limited thereto.

The battery cell 210 according to embodiments may be a nickel metal hydride (Ni-MH) battery or a lithium ion (Li-ion) battery capable of being charged and discharged.

Referring back to FIG. 3, the battery cells 210 described in FIG. 4 are stacked and arranged in one direction (e.g., the X-axis direction) to form one cell unit 200. A single cell unit 200 formed in this manner may be accommodated in the first accommodating portion 110 of the cell accommodating member 100 provided in the battery pack (1000 in FIG. 2) . The electrode tabs (e.g., 215a and 215b of FIG. 4) respectively provided in the plurality of battery cells 210 included in one cell unit 200 may be electrically connected to each other with the same polarity. To this end, the cell unit 200 may be coupled to the bus bar assembly (e.g., 400 in FIG. 2) that electrically connects the electrode tabs (215a and 215b in FIG. 4) provided in the plurality of battery cells 210 to each other with the same polarity. On the other hand, the bus bar assembly (400 in FIG. 2) may be electrically connected to an electric component (not illustrated) such as a battery management system (BMS) .

In the above description, the case in which a pouch-type secondary battery is used as the battery cell 210 provided in the battery pack (1000 in FIG. 2) according to embodiments is described above as an example, but the battery cell 210 is not limited to the aforementioned pouch-type secondary battery, and may be configured as a can-type secondary battery. For example, the can-type secondary battery may have a quadrangular cross-section so as to be stacked and form the cell unit 200. In addition, in the case of a can-type secondary battery having a quadrangular cross section, each electrode may be positioned on the side of the battery cell and connected to the bus bar assembly (400 in FIG. 2).

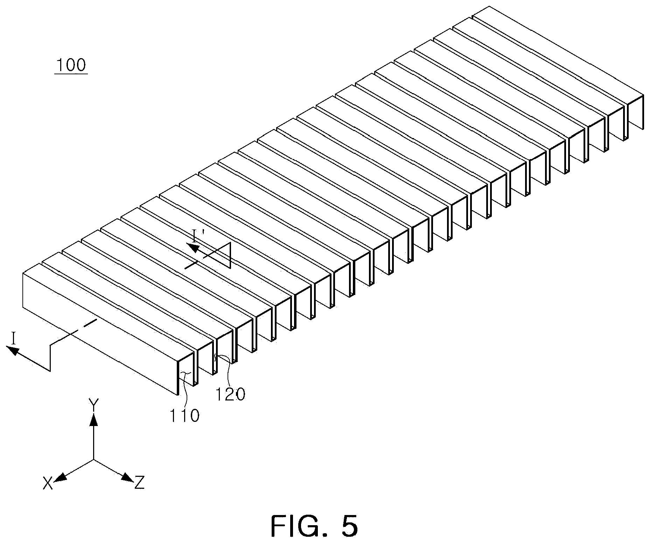

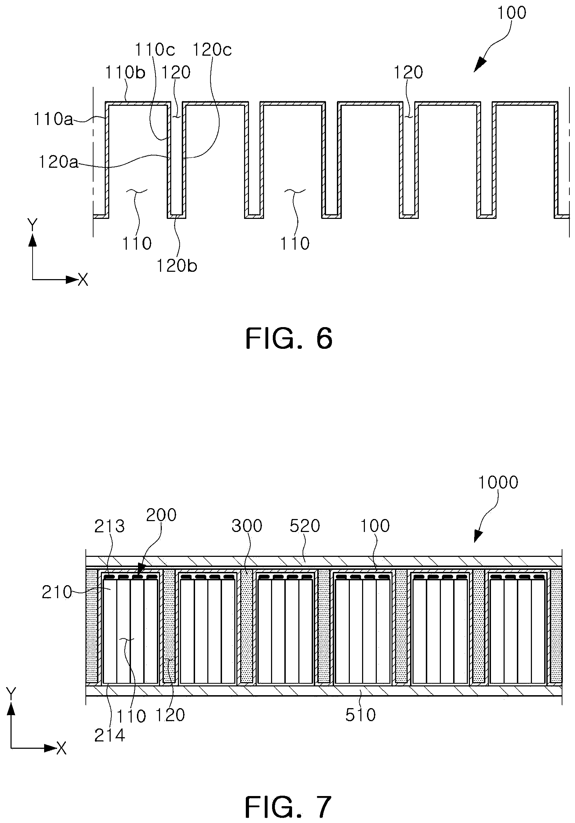

Hereinafter, the cell accommodating member 100 according to embodiments will be described in detail with reference to FIGS. 5 and 6.

FIG. 5 is a perspective view of a cell accommodating member 100 included in a battery pack (e.g., 1000 in FIG. 2) according to embodiments, and FIG. 6 is a cross-sectional view taken along line I-I' of FIG. 5. The cell accommodating member 100 described in FIGS. 5 and 6 corresponds to the cell accommodating member 100 described above with reference to FIGS. 2 to 4, and overlapping descriptions will be omitted.

The cell accommodating member 100 of the battery pack (1000 in FIG. 2) according to an embodiment includes a plurality of accommodating portions 110 and 120 to accommodate various members including a cell unit (e.g., 200 in FIG. 2). Each of the accommodating portions 110 and 120 may be provided in an open shape at one side. In detail, the cell accommodating member 100 may include a first accommodating portion 110 and a second accommodating portion 120 having an open opening such that the constituent members of the battery pack (1000 in FIG. 2) may be accommodated. The opening direction of the first accommodating portion 110 and the opening direction of the second accommodating portion 120 may be different from each other. In embodiments, the cell accommodating member 100 includes a plurality of first accommodating portions 110 of which one side is open and a plurality of second accommodating portions 120 of which the other side is open. For example, as illustrated in FIG. 3, the first accommodating portion 110 may be provided in a shape open toward the lower side (e.g., negative Y-axis direction) of the cell accommodating member 100, and the second accommodating portion 120 may be provided in a shape open toward the upper side (e.g., positive Y-axis direction) of the cell accommodating member 100. In addition, the first accommodating portion 110 and the second accommodating portion 120 may be provided in a shape in which both ends of the cell accommodating member 100 are open in the width direction (e.g., the Z-axis direction). In embodiments, the first accommodating portion 110 and the second accommodating portion 120 may be provided in such a manner that a '⊏'-shaped groove extends in one direction (e.g., the Z-axis direction).

A direction in which the first accommodating portion 110 extends and a direction in which the second accommodating portion 120 extends may be parallel to each other. For example, as illustrated in FIG. 5, the first accommodating portion 110 may be formed by a '⊏'-shaped cross-sectional groove in which an opening faces in the negative Y-axis direction and which extends in the Z-axis direction, and the second accommodating portion 120 may be formed by a '⊏'-shaped cross-sectional groove in which an opening faces in the positive Y-axis direction and which extends in the Z-axis direction.

In embodiments, the first accommodating portion 110 and the second accommodating portion 120 may be alternately arranged in one direction (e.g., the X-axis direction). For example, any one of the second accommodating portions 120 is located between two adjacent first accommodating portions 110. For example, as illustrated in FIG. 6, any one of the first accommodating portions 110 is located on one side of any one of the second accommodating portions 120, and the other first accommodating portion 110 is located on the other side of any one of the second accommodating portions 120. Since the first accommodating portion 110 and the second accommodating portion 120 are alternately arranged, any one of the first accommodating portions 110 may be spaced apart from the other first accommodating portion 110 by a predetermined distance. In this case, the predetermined distance may correspond to the width of the second accommodating portion 120. Since the first accommodating portions 110 are arranged respectively with the second accommodating portion 120 interposed therebetween, physical shock, electric shock, thermal shock, flame, gas, or the like generated in the cell unit (e.g., 200 in FIG. 2) accommodated in any one of the first accommodating portions 110 may be blocked by the adjacent second accommodating portion 120, to be prevented from being transferred to other first accommodating portions 110. Various blocking members may be accommodated in the second accommodating portion 120 according to embodiments such that the second accommodating portion 120 may more effectively block a physical shock, an electric shock, a thermal shock, flames, gas, and the like. For example, as illustrated in FIG. 7, a heat propagation preventing member (300 of FIG. 7) may be accommodated in the second accommodating portion 120. A detailed description thereof will be described later in FIG. 7.

In embodiments, the first accommodating portion 110 and the second accommodating portion 120 of the cell accommodating member 100 may be formed by bending a single plate in a zigzag shape a plurality of times. For example, as illustrated in FIG. 5, the cell accommodating member 100 may be formed as a single plate is bent multiple times in a zigzag shape to alternately form the first accommodating portion 110 and the second accommodating portion 120. In this case, the first accommodating portion 110 may be provided by bending the single plate a plurality of times to have an opening open toward one side (e.g., negative Y-axis direction) of the cell accommodating member 100, and the second accommodating portion 120 may be provided by bending the single plate a plurality of times to have an opening open toward the other side (e.g., positive Y-axis direction) of the cell accommodating member 100. The cell accommodating member 100 may be formed of a metal material such as aluminum or stainless steel to dissipate heat generated in the cell unit 200 externally. Alternatively, the cell accommodating member 100 may be formed of a thermally conductive plastic material, and may have a shape in which a plurality of the first accommodating portions 110 and the second accommodating portions 120 are formed by molding.

In embodiments, the first accommodating portion 110 may be formed on one surface of the cell accommodating member 100, and the second accommodating portion 120 may be formed on the other surface of the cell accommodating member 100. For example, the first accommodating portion 110 and the second accommodating portion 120 may be located on different surfaces of one cell accommodating member 100.

The first accommodating portion 110 may be formed to extend in a first direction (e.g., Z-axis direction) from one surface of the cell accommodating member 100. In this case, the first direction (e.g., the Z-axis direction) may be a longitudinal direction of the battery cell accommodated in the first accommodating portion 110. The second accommodating portion may be formed to extend in the first direction (e.g., the Z-axis direction) from the other surface of the cell accommodating member 100.

The first accommodating portion 110 of one surface of the cell accommodating member 100 and the second accommodating portion of the other surface of the cell accommodating member 100 are alternately disposed in a second direction (e.g., the X-axis direction) intersecting the first direction (e.g., the Z-axis direction), and the cross-section of the cell accommodating member 100 may have a zigzag shape or a corrugated shape.

Referring to the cross-sectional view of FIG. 6, a portion of surfaces of the cell accommodating member 100 is bent a plurality of times to form a first extended surface 110b of the first accommodating portion 110 and first side surfaces 110a and 110c facing each other. For example, the first accommodating portion 110 may be a groove portion having the first extended surface 110b and the first side surfaces 110a and 110c. The first accommodating portion 110 may have an opening opened toward a lower side (e.g., negative Y-axis direction) of the cell accommodating member 100.

The second accommodating portion 120 is located adjacent to the first accommodating portion 110. In embodiments, the second accommodating portion 120 is positioned between any one of the first accommodating portions 110 and the other first accommodating portion 110 adjacent thereto. A portion of the surface of the cell accommodating member 100 may be bent a plurality of times to form a second extended surface 120b of the second accommodating portion 120 and second side surfaces 120a and 120c facing each other. For example, the second accommodating portion 120 may be a groove portion having a second extended surface 120b and second side surfaces 120a and 120c. The second accommodating portion 120 may have an opening that is open toward the upper side (e.g., positive Y-axis direction) of the cell accommodating member 100.

Since the plurality of first accommodating portions 110 and the plurality of second accommodating portions 120 are alternately located, in the cell accommodating member 100, a portion forming the first side surface 110c of any one of the first accommodating portions 110 may correspond to a portion forming the second side surface 120a of any one of the second accommodating portions 120 adjacent to the first accommodating portion 110. In detail, when a portion of some surfaces of the cell accommodating member 100 forms the first side surface 110c of any one of the first accommodating portions 110, at the same time, the portion of some surfaces forms the second side surface 120a of any one of the second accommodating portions 120 adjacent to the first accommodating portion 110. Similarly, in the cell accommodating member 100, a portion forming the second side surface 121c of the other second accommodating portion 120 may form the first side surface 110a of the other first accommodating portion 110 adjacent to the second accommodating portion 120. In this manner, in the cell accommodating member 100, a plurality of first accommodating portions 110 and second accommodating portions 120 may be alternately formed.

In embodiments, a width of the first accommodating portion 110 in one direction (e.g., the X-axis direction) may be greater than a width of the second accommodating portion 120 in one direction (e.g., the X-axis direction).

In FIG. 6, the first extended surface 110b and the first side surfaces 110a and 110c of the first accommodating portion 110 are perpendicular to each other, but this is only an example. For example, the first extended surface 110b and the first side surfaces 110a and 110c of the first accommodating portion 110 may contact each other at various angles. For example, the first extended surface 110b and the first side surfaces 110a and 110c forming the first accommodating portion 110 may not be perpendicular to each other. In addition, at least one of the first extended surface 110b or the first side surfaces 110a and 110c may have a curved surface, which may also be applied to the second accommodating portion 120.

In FIG. 6, the first accommodating portion 110 is formed to have three surfaces (e.g., one first extended surface 110b and two first side surfaces 110a and 110c). This is only an example, and the first accommodating portion 110 may be formed of two surfaces or four more surfaces connected to each other in contact with each other. Alternatively, the first accommodating portion 110 may be formed of a single curved surface, which may also be applied to the second accommodating portion 120.

The cell unit (200 in FIG. 2) is accommodated in the first accommodating portion 110 according to embodiments. In addition, various blocking members including the heat propagation preventing member (300 of FIG. 2) may be accommodated in the second accommodating portion 120 according to embodiments. Hereinafter, various embodiments of the battery pack (1000 of FIG. 2) will be described with reference to FIGS. 7 to 11.

The battery pack 1000, the cell accommodating member 100, the cell unit 200, the heat propagation preventing member 300, the battery cell 210, and the like described in FIGS. 7 to 11 all correspond to the battery pack 1000, the cell accommodating member 100, the cell unit 200, the heat propagation preventing member 300, the battery cell 210, and the like described in FIGS. 2 to 6, and thus, a duplicate description will be omitted. In addition, the upward (upper) or downward (lower) direction described in FIGS. 7 to 11 is for the convenience of drawing description, and only means a direction on the drawing, and does not limit the configuration according to embodiments.

FIG. 7 is a cross-sectional view of the battery pack 1000 according to embodiments. As illustrated in FIG. 7, the battery pack 1000 according to embodiments may include the cell accommodating member 100 for accommodating the cell unit 200, the first housing 510 and the second housing 520 surrounding at least a portion of the outer periphery of the cell accommodating member 100.

The cell accommodating member 100 included in the battery pack 1000 according to embodiments may include a plurality of first accommodating portions 110 and a plurality of second accommodating portions 120. The plurality of first accommodating portions 110 and the plurality of second accommodating portions 120 may be alternately arranged in one direction (e.g., the X-axis direction) . Accordingly, the second accommodating portion 120 may be positioned between the adjacent first accommodating portions 110. The second accommodating portion 120 is positioned between the first accommodating portions 110 and serves to spatially separate the adjacent first accommodating portions 110 from each other.

One or more cell units 200 may be accommodated in the first accommodating portion 110 of the cell accommodating member 100. For example, FIG. 7 illustrates a state in which one cell unit 200 is accommodated in one first accommodating portion 110. The first accommodating portion 110 has an open lower side and is provided to surround upper and side portions of the cell unit 200. The open lower side of the first accommodating portion 110 is positioned to face the first housing 510. In embodiments, the open lower side of the first accommodating portion 110 is closed by the first housing 510. For example, the upper portion and the side portions of the cell unit 200 are covered by the first extended surface (e.g., 110b of FIG. 6) of the first accommodating portion 110 and the first side surfaces (e.g., 110a and 110c of FIG. 6) facing each other, and the lower portion of the cell unit 200 is covered by the first housing 510. Accordingly, the cell unit 200 may be separated from the external environment by being surrounded by the first accommodating portion 110 and the first housing 510.

In embodiments, two or more cell units 200 may be accommodated in one first accommodating portion 110. Alternatively, a partition wall dividing the first accommodating portion 110 into two or more spaces may be additionally provided in one first accommodating portion 110, and one cell unit 200 may be accommodated in each space partitioned by the partition wall.

In embodiments, a plurality of battery cells 210 are stacked in the cell unit 200. In embodiments, the stacking direction of the battery cells 210 may be perpendicular to the first side surfaces (110a and 110c of FIG. 6) of the first accommodating portion 110. The direction in which the battery cells 210 are stacked may vary. For example, the stacking direction of the battery cells 210 may also be a direction perpendicular to the first extended surface (110b in FIG. 6) of the first accommodating portion 110. The plurality of battery cells 210 stacked on one cell unit 200 may be electrically connected to each other to output electrical energy externally.

In the cell unit 200 according to embodiments, the plurality of battery cells 210 may be stacked such that bending portions 214 of the battery cells 210 all face in the same direction (e.g., the negative Y-axis direction) . Accordingly, in one cell unit 200, all of the bending portions 214 of the battery cell 210 may face in the same direction. For example, as illustrated in FIG. 7, in one cell unit 200, all of the bending portions 214 of the battery cells 210 may be provided such that the openings of the first accommodating portions 110 face in an open direction. In this case, the bending portions 214 of the battery cells 210 included in the cell unit 200 may be arranged to face the first housing 510. Since all of the bending portions 214 corresponding to one ends of the battery cells 210 are arranged to face the first housing 510, all of the sealing portions 213 corresponding to the other ends of the battery cell 210 may be arranged adjacent to the first extended surface (110b of FIG. 6) of the first accommodating portion 110. As such, when the bending portion 214 of the battery cell 210 faces the first housing 510, the contact area between the battery cell 210 and the first housing 510 may increase. Accordingly, heat generated in the battery cell 210 may be easily transferred to the first housing 510 to increase the cooling efficiency of the battery cell 210. However, this is only an example, and in the cell unit 200 according to embodiments, the sealing portions 213 of the battery cells 210 may be arranged to face in a direction in which the opening of the first accommodating portion 110 is open.

In the cell accommodating member 100 according to embodiments, the cell unit 200 in which a plurality of battery cells 210 are stacked may be accommodated in the first accommodating portion 110, to protect the battery cells 210 from the external environment. Also, the first accommodating portion 110 of the cell accommodating member 100 may serve to support the cell unit 200. For example, the first accommodating portion 110 surrounds at least a partial surface of the cell unit 200 and applies a predetermined bearing force thereto, and thus, may fix the position of the cell unit 200 and may support such that the stacked state of the cell unit 200 may be maintained. Since the first accommodating portions 110 of the cell accommodating member 100 are arranged in one direction (e.g., the X-axis direction in FIG. 7), the cell units 200 accommodated in the first accommodating portions 110 may also be aligned in one direction (X-axis direction in FIG. 7) to be stably maintained in an electrical connection. In addition, the cell accommodating member 100 may surround the cell unit 200 and perform a function of emitting thermal energy generated in the cell unit 200 externally. To this end, the cell accommodating member 100 according to embodiments may be formed of a metal material such as aluminum or stainless steel (SUS) or a thermally conductive plastic.

In the cell accommodating member 100 according to embodiments, the second accommodating portion 120 may be provided between the first accommodating portions 110. The second accommodating portion 120 may serve to separate the first accommodating portions 110 located on both sides of the second accommodating portion 120. In detail, in the cell accommodating member 100, the portion forming the second extended surface (e.g., 120b in FIG. 6) of the second accommodating portion 120 is fixed to the first housing 510 and separate the first accommodating portions 110 adjacent to each other. To fix the second extended surface (120b of FIG. 6) of the second accommodating portion 120 to the first housing 510, various fixing methods may be applied. For example, a portion of the cell accommodating member 100 forming the second extended surface (120b in FIG. 6) of the second accommodating portion 120 may be fixed to the first housing 510 via an adhesive. In this case, the adhesive may be provided as a thermal adhesive. Alternatively, a portion of the cell accommodating member 100 forming the second extended surface (120b in FIG. 6) of the second accommodating portion 120 may be welded to and fixed to the first housing 510. In the cell accommodating member 100, an additional fastening member (e.g., a screw) may also be provided to fix the portion forming the second extended surface (120b in FIG. 6) of the second accommodating portion 120 to the first housing 510.

In embodiments, the second housing 520 may be provided adjacent to the open opening of the second accommodating portion. For example, the second housing 520 may cover the open opening of the second accommodating portion 120.

The heat propagation preventing member 300 may be accommodated in the second accommodating portion 120 according to embodiments. For example, as illustrated in FIG. 7, one unit of the heat propagation preventing member 300 may be accommodated in one second accommodating portion 120. The heat propagation preventing member 300 may include a material having at least one property among flame retardancy, fire resistance, heat insulation, and heat absorption. For example, the heat propagation preventing member 300 may include at least a portion of mica, silicate, graphite, and alumina materials capable of performing a function of preventing heat and/or flame propagation. However, the type of the heat propagation preventing member 300 is not limited thereto, and various known materials such as a phase change material may be used. In addition, the heat propagation preventing member 300 may be formed in the form coated on or filling the second accommodating portion 120. The heat propagation preventing member 300 may also be filled in at least a partial region of the second accommodating portion 120 in a gel state. In addition, the heat propagation preventing member 300 may be formed in a predetermined shape and then disposed in the second accommodating portion 120. In addition, a buffer pad (not illustrated) for absorbing swelling pressure when a swelling phenomenon occurs in the battery cell 210 may be installed in the second accommodating portion 120, in addition to the heat propagation preventing member 300. FIG. 7 is only an example in which the heat propagation preventing member 300 is accommodated, and thus, in embodiments, the heat propagation preventing member 300 may be accommodated in only a portion of the plurality of second accommodating units 120.

The second accommodating portion 120 according to embodiments may accommodate the heat propagation preventing member 300 in an internal space to block heat propagation between adjacent first accommodating portions 110. Since the second accommodating portion 120 is provided between the adjacent first accommodating portions 110 to spatially separate the first accommodating portions 110 from each other, the heat propagation preventing member 300 accommodated in the second accommodating portion 120 may prevent heat and/or flame and gas generated in the cell unit 200 accommodated in any one first accommodating portion 110 from propagating to the cell unit 200 accommodated in another first accommodating portion 110.

In addition to the heat propagation preventing member 300, materials for various usage, such as a buffer pad for absorbing swelling pressure, may be additionally accommodated in the second accommodating portion 120.

As electrical energy is generated in the cell unit 200, thermal energy may also be generated due to a chemical reaction or electrical resistance occurring in respective battery cells 210. This thermal energy increases the internal temperature of the cell unit 200, and in a case in which the heat dissipation of the cell unit 200 is insufficient, the electrical performance of the cell unit 200 may be reduced or a fire may occur. Accordingly, a structure for discharging thermal energy generated from the cell unit 200 externally of the battery pack 1000 is required. Accordingly, the battery pack 1000 according to embodiments may further include heat transfer members 130a and 130b provided between the cell unit 200 and the housing, to well discharge heat energy generated in the cell unit 200 externally.

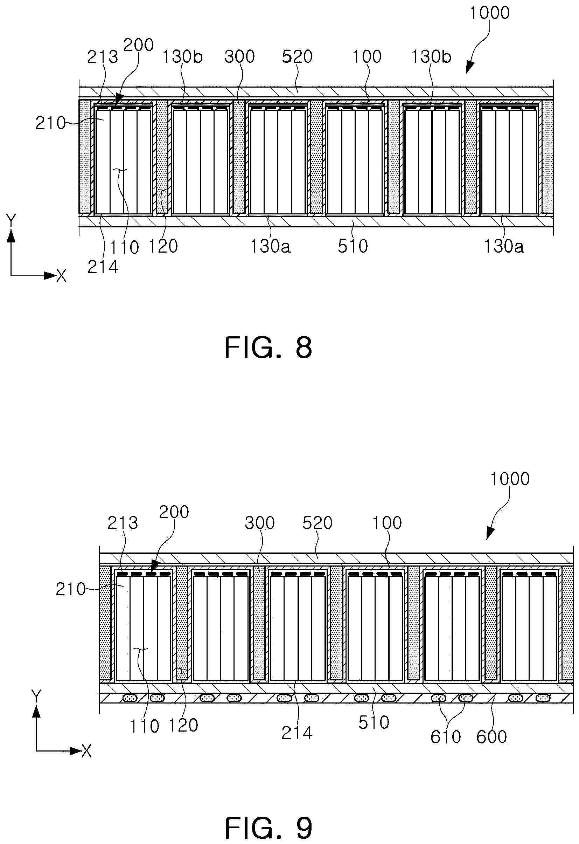

FIG. 8 is a cross-sectional view of a battery pack 1000 to which the heat transfer members 130a and 130b according to embodiments are applied.

The battery pack 1000 described in FIG. 8 includes all the components of the battery pack 1000 of FIG. 7, and a redundant description will be omitted.

As illustrated in FIG. 8, the heat transfer members 130a and 130b may be accommodated in the first accommodating portion 110 like the cell unit 200. In embodiments, the cell unit 200 may be accommodated in the first accommodating portion 110 via the heat transfer members 130a and 130b.

As the heat transfer members 130a and 130b, one or more heat transfer members may be provided. For example, the heat transfer members 130a and 130b may include a first heat transfer member 130a and a second heat transfer member 130b provided on the upper and lower portions of the cell unit 200, respectively, as illustrated in FIG. 8. However, FIG. 8 is only an example, and thus, the heat transfer members 130a and 130b according to embodiments may also be provided in a form that surrounds both upper and lower portions and both sides of the cell unit 200.

In embodiments, the heat transfer member (130a, 130b) may include at least one of the first heat transfer member 130a or the second heat transfer member 130b. The first heat transfer member 130a may be provided in contact with the bending portion 214 of the cell unit 200. Accordingly, thermal energy generated in the cell unit 200 may be discharged externally through the bending portion 214, the first heat transfer member 130a, and the first housing 510. Since the heat transfer rate is further increased due to the first heat transfer member 130a, thermal energy generated in the cell unit 200 may be more easily radiated externally through the first housing 510. On the other hand, the second heat transfer member 130b may be provided in contact with the sealing portion 213 of the cell unit 200. Accordingly, the thermal energy generated in the cell unit 200 may be transferred to the cell accommodating member 100 through the second heat transfer member 130b and then may be discharged externally through the first housing 510. On the other hand, although not illustrated in FIG. 9, the first extended surface (110b in FIG. 6) of the first accommodating portion 110 may also be configured to contact the second housing 520, and in this case, the thermal energy generated in the cell unit 200 may be discharged externally through the second heat transfer member 130b and the second housing 520. For example, the first heat transfer member 130a and the second heat transfer member 130b may be provided on at least one side of the upper and lower portions of the cell unit 200 to serve to transfer thermal energy generated from the cell unit 200 externally of the housing. To this end, the heat transfer members 130a and 130b may be formed of thermal grease, thermal adhesive, thermal epoxy, or a heat dissipation pad.

On the other hand, the battery pack 1000 according to embodiments may include a cooling portion provided on at least one of the first housing 510 and the second housing 520 such that thermal energy generated from the cell unit 200 may be more smoothly radiated toward the first housing 510.

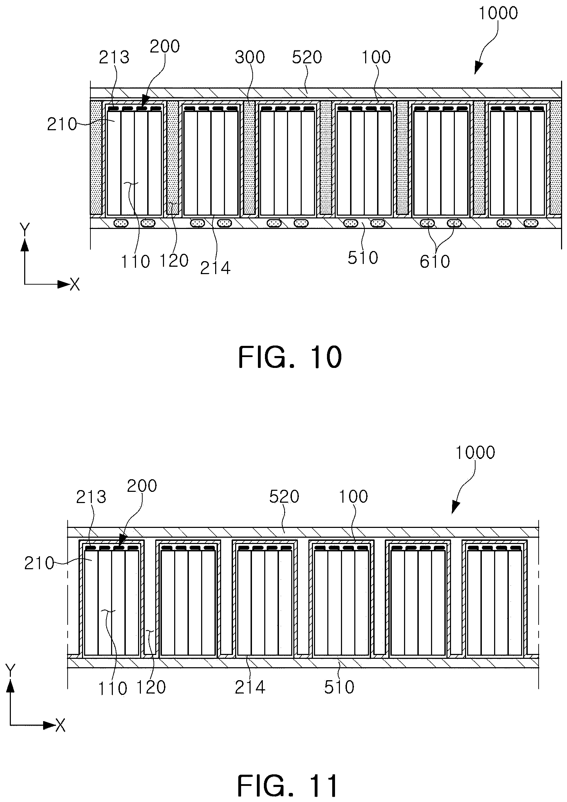

FIGS. 9 and 10 are cross-sectional views of the battery pack 1000 to which a cooling portion 600 or a cooling tube 610 is applied according to embodiments.

The battery pack 1000 described in FIGS. 9 and 10 includes the components of the battery pack 1000 of FIGS. 7 to 8, and redundant descriptions will be omitted.

The battery pack 1000 according to embodiments may further include the cooling portion 600 provided on at least a portion of an outer surface of the housing. The cooling portion 600 may be provided on the outer surface of at least one of the first housing 510 or the second housing 520. For example, as illustrated in FIG. 9, the battery pack 1000 may further include the cooling portion 600 provided on at least a portion of an outer surface of the first housing 510. In addition, the cooling portion 600 may further include the cooling tube 610 which is provided in a hollow shape and through which a coolant (cooling liquid) flows. Since the cooling portion 600 is provided on the outer side of the first housing 510, the temperature gradient from the cell unit 200 to the first housing 510 is greater than when the cooling portion 600 is not provided, and thus, thermal energy generated in the cell unit 200 may be more smoothly discharged through the first housing 510. However, FIG. 9 is an example, and the cooling portion 600 according to embodiments may be provided only on the outer surface of the second housing 520, or may be provided both on at least a portion of the outer surface of the first housing 510 and at least a portion of the outer surface of the second housing 520.

The housing 500 of the battery pack 1000 according to embodiments may have a structure in which the cooling portion is integrally formed inside the housing. For example, the cooling portion may have a structure in which the cooling tube 610 that forms a cooling passage in the housing is provided. Referring to FIG. 10, the first housing 510 according to embodiments may include the cooling tube 610 therein. In this case, the cooling tube 610 may be a cooling portion provided inside the first housing 510. In detail, the cooling tube 610 provided inside the first housing 510 may be provided in a hollow shape, and may be provided in a state in which a coolant flows therein.

The battery pack 1000 according to embodiments may not include a heat propagation preventing member (300 in FIG. 7) or a heat transfer member (130a and 130b in FIG. 8) . For example, as illustrated in FIG. 11, the second accommodating portion 120 of the battery pack 1000 according to embodiments may be formed as an empty space . Even without the heat propagation preventing member (300 in FIG. 7), the second accommodating portion 120 may form an insulating space by separating the first accommodating portions 110 from each other, and thus, heat and/or flame/gas propagation between the first accommodating portions 110 may be prevented. In this case, the thermal energy generated by the battery cell 210 and the cell unit 200 may be emitted in a direction from the first accommodating portion 120 toward the housings 510 and 520.

The plurality of cell units 200 accommodated in the first accommodating portion 120 according to embodiments may be electrically connected to each other through a bus bar assembly (e.g., 400 in FIG. 2). In addition, an electrode terminal of the bus bar assembly (400 in FIG. 2) may be exposed externally of the battery pack 1000, or may be electrically connected to a terminal unit (not illustrated) provided outside of the battery pack 1000. For example, the plurality of cell units 200 included in the battery pack 1000 according to embodiments may be electrically connected to the terminal unit (not illustrated) through the bus bar assembly (400 in FIG. 2).

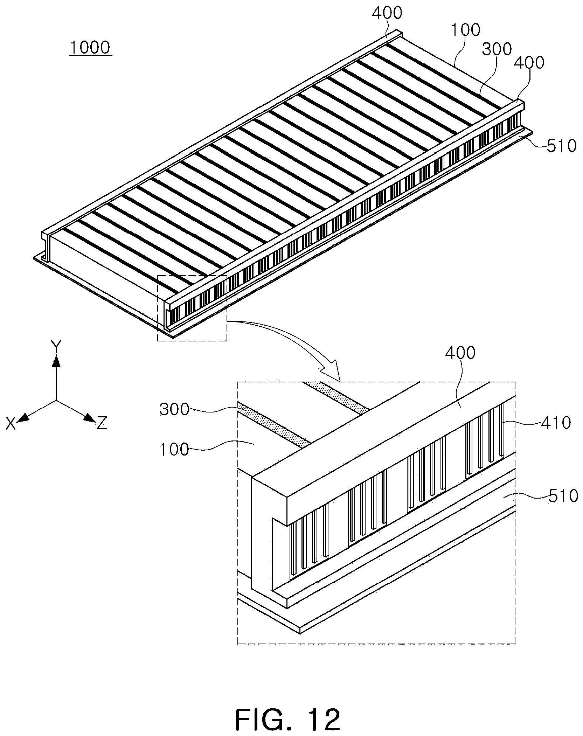

FIG. 12 is an illustrative diagram of a battery pack 1000 including a bus bar assembly 400 according to embodiments. FIG. 12 illustrates a state in which the second housing (520 in FIG. 2) is omitted from among the first housing 510 and the second housing (e.g., 520 in FIG. 2) in the battery pack 1000 according to embodiments.

Since the battery pack 1000 described with reference to FIG. 12 includes the battery pack 1000 described with reference to FIGS. 2 to 11, a redundant description will be omitted.

The bus bar assembly 400 according to embodiments may be disposed on at least one side of the cell unit (e.g., 200 in FIG. 2) to electrically connect the plurality of cell units (200 in FIG. 2) to each other. For example, as illustrated in FIG. 12, the bus bar assembly 400 may be coupled to the cell accommodating member 100 and the cell unit (200 in FIG. 2) on both ends of the cell unit 200 (refer to FIG. 2) in the longitudinal direction (e.g., the Z-axis direction), to electrically connect the plurality of cell units (200 in FIG. 2) to each other. Grooves corresponding to the end surfaces of the electrode tabs 215a and 215b of FIG. 4 may be provided in at least some surfaces of the bus bar assembly 400, such that the electrode tabs (215a and 215b of FIG. 4) of the battery cell (e.g., 210 of FIG. 4) included in the plurality of cell units (200 of FIG. 2) may be inserted thereinto. The electrode tabs (refer to 215a and 215b in FIG. 4) provided in each cell unit (200 in FIG. 2) may be inserted into the grooves of the bus bar assembly 400 and electrically connected to a conductive bus bar included in the bus bar assembly 400.

A cell protection member (not illustrated) protecting the plurality of battery cells (210 in FIG. 4) stacked in the cell unit (200 in FIG. 2) may be additionally provided in the bus bar assembly 400 according to embodiments. For example, the cell protection member (not illustrated) may be inserted between a plurality of battery cells (210 in FIG. 4) stacked in the cell unit (200 in FIG. 2) to protect the battery cells (210 in FIG. 4) from external impact. In addition, the cell protection member (not illustrated) is inserted between the plurality of battery cells (210 in FIG. 4) to help stable coupling between the cell unit (200 in FIG. 2) and the bus bar assembly 400.

The bus bar assembly 400 according to embodiments may be provided with a length corresponding to the length of the cell accommodating member 100, to connect all of the plurality of cell units (200 in FIG. 2) accommodated in the cell accommodating member 100.

In order for the bus bar assembly 400 to be firmly coupled to the cell accommodating member 100, on at least a partial surface in contact with the cell accommodating member 100, the bus bar assembly 400 may include a protrusion (not illustrated) corresponding to the shape of a first accommodating portion (e.g., 110 in FIG. 2) and a second accommodating portion (e.g., 120 in FIG. 2). In addition, the bus bar assembly 400 may cover a portion of the lower surface of the second accommodating portion (120 in FIG. 2). Accordingly, both ends of the heat propagation preventing member 300 accommodated in the second accommodating portion (120 in FIG. 2) in the longitudinal direction are blocked by the bus bar assembly 400, and thus, may not fall off the second accommodating portion.

In embodiments, the bus bar assembly 400 may be electrically connected to an electrical component such as a battery management system (BMS).

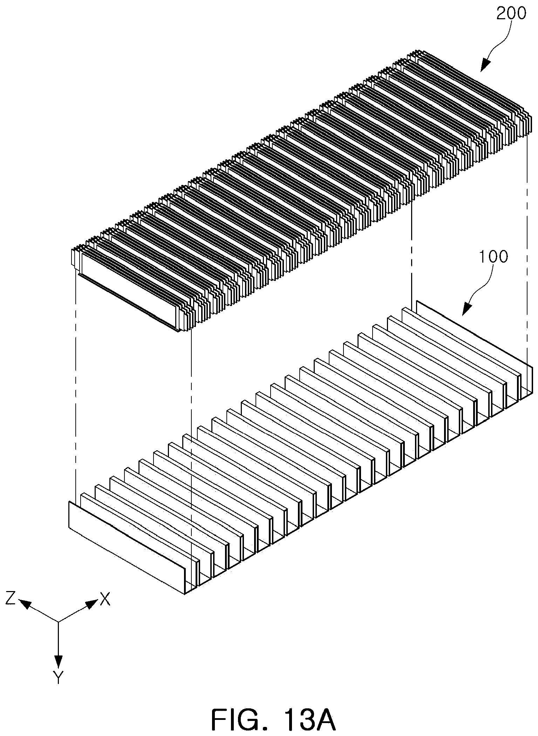

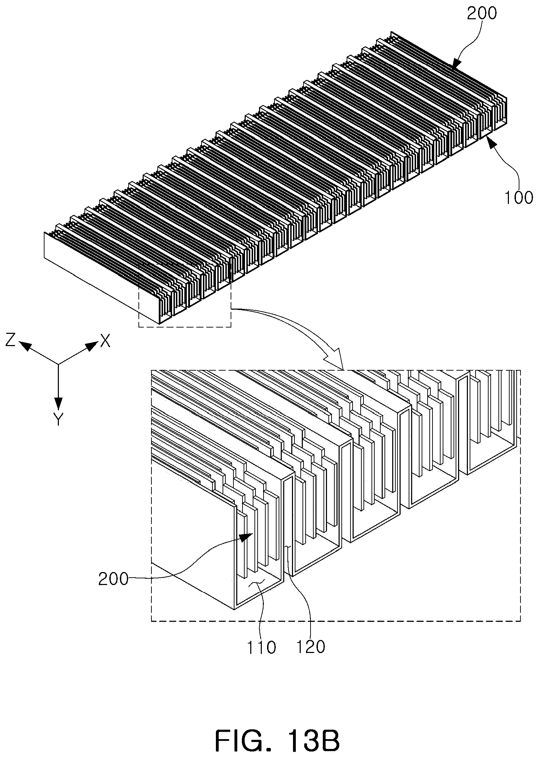

FIGS. 13 to 17 are illustrative views illustrating a method of manufacturing a battery pack (e.g., 1000 in FIG. 2) according to embodiments.

Since the battery pack (e.g., 1000 in FIG. 2) and detailed components thereof described in FIGS. 13 to 17 include the components of the battery pack 1000 described in FIGS. 2 to 12, redundant descriptions are omitted.

In addition, the order in the method of manufacturing the battery pack (1000 of FIG. 2) according to embodiments is not limited to the order described below, and it should be noted that the order may be changed without special difficulty by those with average knowledge in the art.

FIGS. 13A and 13B are illustrative views illustrating a state in which the cell unit 200 is accommodated in the cell accommodating member 100 according to embodiments.

As illustrated in FIG. 13A, to manufacture the battery pack (1000 in FIG. 2) according to embodiments, the cell unit 200 including one or more battery cells 210 is prepared. The battery cell 210 may be a pouch-type secondary battery including a sealing portion (e.g., 213 in FIG. 4) and a bending portion (e.g., 214 in FIG. 4). For example, a plurality of battery cells 210 may be stacked to form one cell unit 200. An adhesive portion (not illustrated) such as double-sided tape may be used to fix the battery cells 210 forming one cell unit 200 to each other. The cell unit 200 formed in this manner may be accommodated in the cell accommodating member 100. The number of battery cells 210 constituting one cell unit 200 may be variously provided. For example, the cell unit 200 according to embodiments may be comprised of a plurality of battery cells 210. However, the cell unit 200 according to embodiments is not limited to being formed of a plurality of battery cells 210 and may also be formed of only one battery cell 210. In this case, one cell unit 200 may correspond to one battery cell 210.

The cell accommodating member 100 capable of accommodating a plurality of cell units 200 is prepared. The cell accommodating member 100 may include a plurality of first accommodating portions 110 and a plurality of second accommodating portions 120 capable of accommodating the cell units 200. The first accommodating portion 110 of the cell accommodating member 100 is provided with one side open, and the second accommodating portion 120 is provided with the other side open. The first accommodating portion 110 and the second accommodating portion 120 may be alternately positioned with each other. For example, as illustrated in FIG. 13B, any one of the first accommodating portions 110 is located on one side of the second accommodating portion 120, and another first accommodating portion 110 is located on the other side of the second accommodating portion 120. Since the first accommodating portion 110 and the second accommodating portion 120 having different opening directions are alternately positioned, the cell accommodating member 100 according to embodiments may have a zigzag shape or a wrinkled shape as a whole.

The cell accommodating member 100 according to embodiments may be formed by bending a single plate a plurality of times. For example, the cell accommodating member 100 according to embodiments may be formed by processes including preparing a single plate, bending the prepared plate a plurality of times, forming the first accommodating portion 110 on one surface of the bent plate, and forming the second accommodating portion 120 on the other surface of the bent plate. The cell accommodating member 100 may be formed by repeating the process of bending a single plate to form one first accommodating portion 110 and the second accommodating portion 120 adjacent thereto, a plurality of times, but a plurality of accommodating portions 110 and 120 may also be formed at the same time. In addition, the cell accommodating member 100 may be formed by molding processing such as molding as well as bending processing.

The cell unit 200 may be inserted into the first accommodating portion 110 of the cell accommodating member 100. For example, a plurality of cell units 200 may be prepared and inserted one by one into the first accommodating portion 110. However, this is only an example, and a plurality of cell units 200 may be accommodated in one first accommodating portion 110. In embodiments, the operation of inserting the cell unit 200 may include disposing heat transfer members (for example, 130a and 130b in FIG. 8) provided to contact the cell unit 200, together with the insertion of the cell unit 200 or before and after the cell unit 200 is inserted.

In the method of manufacturing the battery cell 210 according to embodiments, in the process in which the cell unit 200 is inserted, the opening direction of the first accommodating portion 110 of the cell accommodating member 100 may face upwardly in the direction of gravity. Accordingly, the cell unit 200 may be easily accommodated in the first accommodating portion 110 by descending downwardly in the direction of gravity.

The plurality of cell units 200 may be simultaneously inserted into the first accommodating portions 110 in the position corresponding thereto, or may be sequentially inserted from one side of the cell accommodating member 100.

In a state in which the insertion of the cell unit 200 is completed, the electric power tabs (e.g., 215a and 215b in FIG. 4) included in the cell unit 200 may be aligned side by side on the ends of the cell accommodating member 100 in the width direction.

When the insertion of the cell unit 200 is completed, the first accommodating portion 110 is covered with the first housing 510.

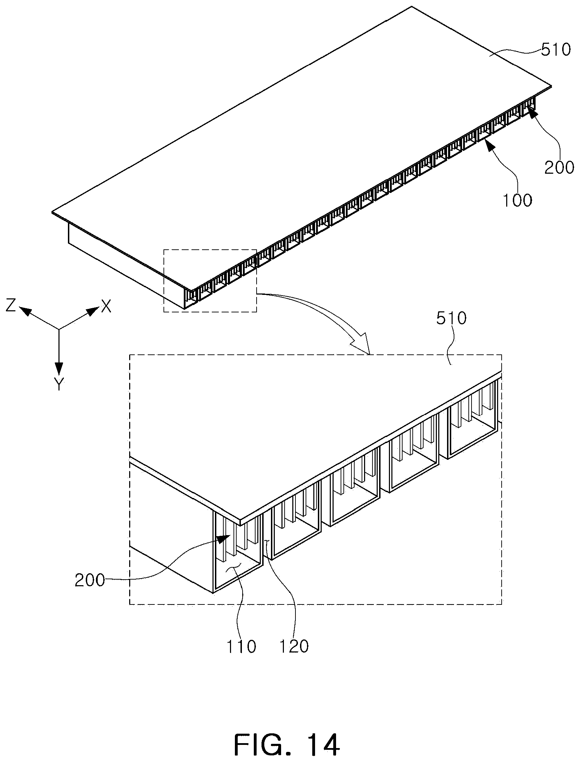

FIG. 14 is an illustrative view illustrating a state of the cell accommodating member 100 covered with the first housing 510.

The first housing 510 is provided to cover the cell accommodating member 100, and thus may cover entirely the first accommodating portion 110 of the cell accommodating member 100.

The first housing 510 may close one open side of the first accommodating portion 110 while covering the first accommodating portion 110. A portion on which the first housing 510 and the cell accommodating member 100 contact each other may be fixed such that the first housing 510 closes the open one side of the first accommodating portion 110. To this end, application, or welding of an adhesive (not illustrated) may be performed in the process of coupling the first housing 510 to the cell accommodating member 100, or an additional fastening member (not illustrated) may be provided. Since the first housing 510 closes one open side of the first accommodating portion 110, the cell unit 200 accommodated in the first accommodating portion 110 may be surrounded by the first accommodating portion 110 and the first housing 510 to be protected from the external environment. The first housing 510 is provided to absorb thermal energy generated from the cell unit 200 and discharge the absorbed thermal energy to the external environment to maintain the temperature of the cell unit 200 in a constant state.

The first housing 510 according to embodiments may cover the cell accommodating member 100 by descending in the same direction as a direction in which the cell unit 200 is inserted into the cell accommodating member 100. Accordingly, the first housing 510 may be stably coupled to the cell accommodating member 100 in a state in which the cell unit 200 is inserted into the cell accommodating member 100. Also, even after the first housing 510 covers the cell accommodating member 100, the second accommodating portion 120 of the cell accommodating member 100 may be maintained in an open state.

The length and width of the first housing 510 according to embodiments may be greater than the total length and width of the cell accommodating member 100. Accordingly, the first housing 510 may cover all the first accommodating portions 110 of the cell accommodating member 100 and the cell units 200 accommodated in the first accommodating portions 110. In FIG. 14, the first housing 510 is illustrated as a flat member, but this is only an example, and the first housing 510 according to embodiments may have any shape capable of covering the first accommodating portion 110.

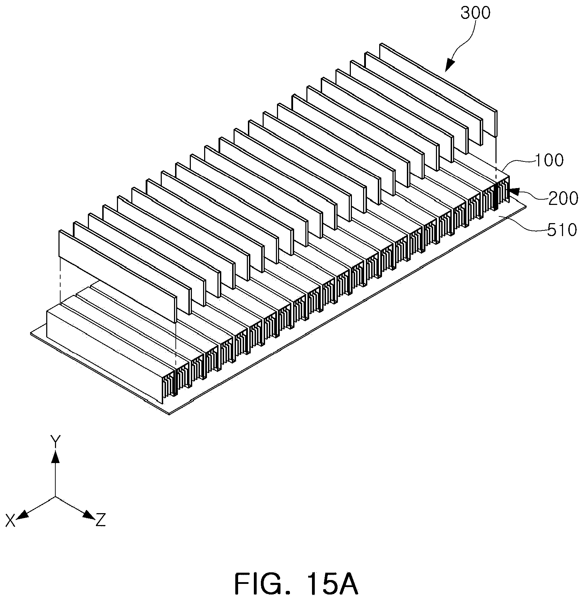

In a state in which the first housing 510 covers the cell accommodating member 100 and the first accommodating portion 110, the cell accommodating member 100 is inverted. For example, when the first housing 510 is coupled in a state in which the open one side of the first accommodating portion 110 faces upwardly in the direction of gravity, the cell accommodating member 100 is inverted such that the other open side of the second accommodating portion 120 faces upwardly in the direction of gravity. Accordingly, the cell accommodating member 100 may be prepared in the state illustrated in FIG. 15A, for example, in a state in which the cell accommodating member 100 is coupled to the upper portion of the first housing 510.

In embodiments, after the cell accommodating member 100 is inverted, an operation of accommodating the heat propagation preventing member 300 in the second accommodating portion 120 may be performed. For example, as illustrated in FIG. 15A, the heat propagation preventing member 300 may have a certain shape and be inserted from the other open side of the second accommodating portion 120 to be accommodated in the second accommodating portion 120. However, although FIG. 15A illustrates a state in which the heat propagation preventing member 300 is inserted, various protective members other than the heat propagation preventing member 300 may be inserted into the second accommodating portion 120 according to embodiments. In addition, the heat propagation preventing member 300 may be accommodated in at least a partial region of the second accommodating portion 120 by a method such as application or filling.

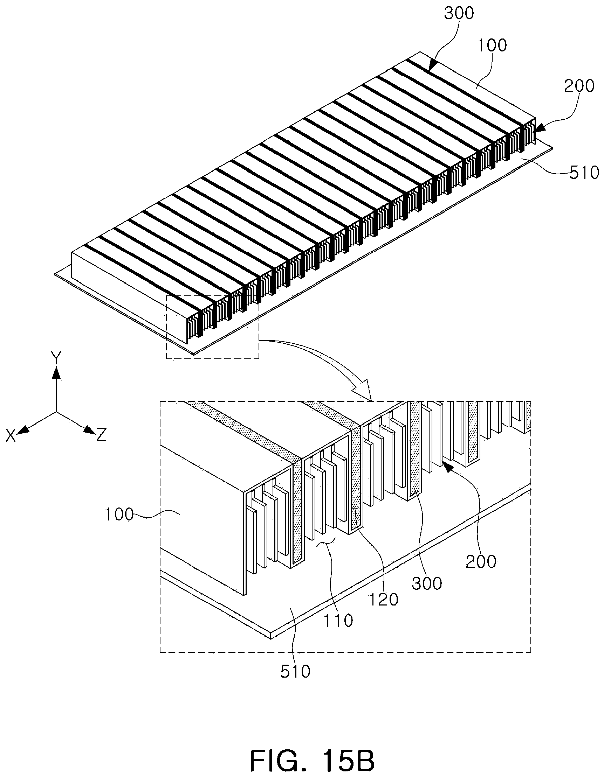

FIG. 15B illustrates a state in which the plurality of heat propagation preventing members 300 are accommodated in the second accommodating portion 120 of the cell accommodating member 100.

As illustrated in FIG. 15B, the cell unit 200 may be accommodated in one side of the cell accommodating member 100 coupled to the upper portion of the first housing 510, and the heat propagation preventing member 300 may be accommodated in the other side thereof, alternately. Since the first accommodating portion 110 and the second accommodating portion 120 are alternately arranged in one direction (for example, the X-axis direction), the cell unit 200 and the heat propagation preventing member 300 accommodated in the first accommodating portion 110 and the second accommodating portion 120, respectively, may also be alternately positioned in the same direction. For example, the heat propagation preventing member 300 is accommodated in the second accommodating portion 120 and positioned between the neighboring and different cell units 200, and may thus serve to block heat and/or flame and gas propagation between different neighboring cell units 200.

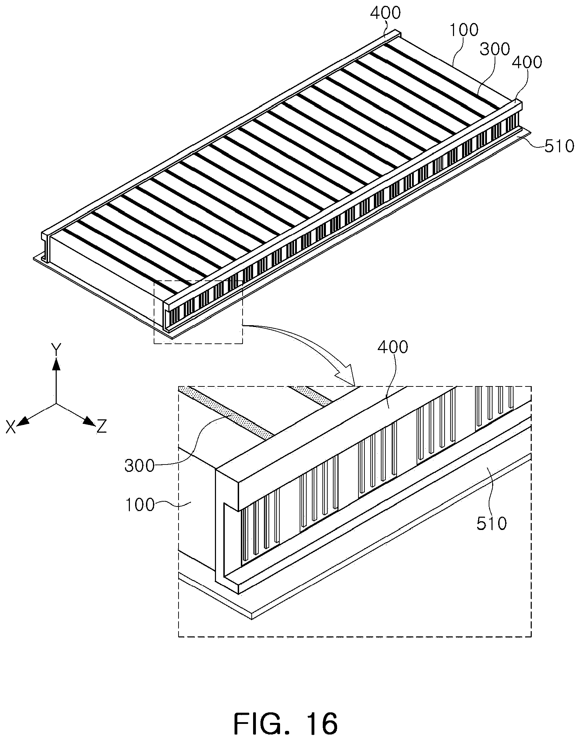

In a state in which the cell unit 200 is accommodated in the first accommodating portion 110, the cell unit 200 may be electrically connected to the bus bar assembly 400. FIG. 16 is an illustrative view illustrating a state in which the bus bar assembly 400 is electrically connected to the cell unit 200.

The bus bar assembly 400 may electrically connect a plurality of cell units accommodated in the first accommodating portions 110 (e.g., 200 in FIG. 15A) to each other to form a series and parallel electrical connection structure. For example, as illustrated in FIG. 16, as the bus bar assembly 400, two or more bus bar assemblies may be provided, and may be electrically connected to the cell unit (200 of FIG. 15A) on both ends of the battery cells included in the cell unit (200 of FIG. 15A) in the longitudinal direction.

In embodiments, the bus bar assembly 400 may be coupled to the cell accommodating member 100 while being in contact with the cell accommodating member 100. Accordingly, the cell unit (200 in FIG. 15A) surrounded by the first accommodating portion 110 and the first housing 510 may be electrically coupled to the bus bar assembly 400 on both ends of the cell unit (200 in FIG. 15A) in the longitudinal direction.

On the other hand, the bus bar assembly 400 may be electrically connected to the cell unit (200 of FIG. 15A) in a state in which both the cell unit (200 of FIG. 15A) and the heat propagation preventing member 300 are accommodated. For example, as illustrated in FIG. 16, the bus bar assembly 400 may be coupled to both ends of the cell accommodating member 100 accommodating both the cell unit (200 in FIG. 15A) and the heat propagation preventing member 300 in the width direction (e.g., in the Z-axis direction) .

The bus bar assembly 400 may form various electric circuits by electrically connecting the cell units (200 of FIG. 15A) to each other. For example, the bus bar assembly 400 may connect two different cell units (200 of FIG. 15A) in a serial/parallel structure.

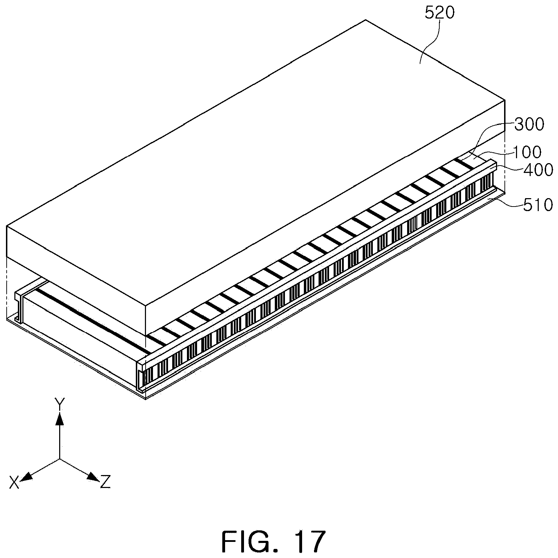

When the electrical connection between the bus bar assembly 400 and the cell unit 200 (refer to FIG. 15A) is completed, the second housing 520 is coupled to the first housing 510. FIG. 17 is an illustrative view illustrating a state in which the second housing 520 is coupled to the first housing 510.

The second housing 520 may be in contact with the first housing 510 to surround at least a portion of the outer portion of the cell accommodating member 100. For example, as illustrated in FIG. 17, the second housing 520 is coupled to the upper portion of the first housing 510. The cell accommodating member 100 may be accommodated in the internal space formed by the first housing 510 and the second housing 520. The first housing 510 and the second housing 520 may be coupled to each other to form the outer portion of the battery pack (e.g., 1000 in FIG. 2) according to embodiments.

In embodiments, coupling the first housing 510 and the second housing 520 may further include closing the open portion of the second accommodating portion 120 with the second housing 520.

In the first housing 510 or the second housing 520, a through hole (not illustrated) may be formed through which the electrode terminal (not illustrated) of the bus bar assembly 400 is exposed externally, or an external terminal (not illustrated) connected to an electrode terminal (not illustrated) of the bus bar assembly 400 may be provided. Accordingly, the electric circuit outside the battery pack (1000 in FIG. 2) is electrically connected to the cell unit (e.g., 200 in FIG. 2) through the electrode terminal or the external terminal of the bus bar assembly 400, thereby performing charging/discharging of the cell unit 200.

In detail, although the above embodiments illustrate the case in which the present inventive concept is applied to the battery pack 1000, the cell accommodating member 100 according to embodiments of the present inventive concept may also be applied to a battery module. In this case, the housing 500 described through the embodiments may constitute a module housing, and the first accommodating portion 110 of the cell accommodating member 100 may have a structure of accommodating the plurality of cell units 200 in the module housing. In addition, the second accommodating portion 120 may accommodate the heat propagation preventing member 300. In this case, embodiments of the present inventive concept may provide a structure in which a plurality of battery modules including the cell accommodating member 100 in which the plurality of cell units 200 are installed are installed inside the pack housing.

As set forth above, according to embodiments, since the cell unit including one or more battery cells is directly accommodated in the cell accommodating member, the number of battery cells that may be accommodated in the same space may increase, thereby increasing energy density of a battery pack.

In addition, according to embodiments, by spatially separating the accommodating units from each other, a dangerous situation occurring in a cell unit accommodated in one accommodating portion may be prevented from propagating to a cell unit accommodated in an adjacent accommodating portion.

According to embodiments, the heat propagation preventing member may be accommodated to prevent heat and/or flame and gas from propagating between the cell units to protect the cell units from dangerous situations (e.g., thermal runaway situations and the like).

In addition, according to embodiments, pressure generated when the battery cell is swollen may be absorbed through a second accommodating portion or a heat propagation preventing member accommodated in the second accommodating portion.

According to embodiments, the cell accommodating member and the housing may surround and accommodate the cell unit, thereby effectively dissipating thermal energy generated from the cell unit externally, and stably supporting the battery cell and the cell unit including the battery cell.

In addition, the battery pack according to embodiments may accommodate more battery cells in the same space as compared to a battery pack of the related art, thereby improving energy density and maintaining thermal or structural stability.

While this disclosure includes specific examples, it will be apparent to one of ordinary skill in the art that various changes in form and details may be made in these examples without departing from the spirit and scope of the claims and their equivalents. The examples described herein are to be considered in a descriptive sense only, and not for purposes of limitation. Descriptions of features or aspects in each example are to be considered as being applicable to similar features or aspects in other examples. Suitable results may be achieved if the described techniques are performed to have a different order, and/or if components in a described system, architecture, device, or circuit are combined in a different manner, and/or replaced or supplemented by other components or their equivalents. Therefore, the scope of the disclosure is defined not by the detailed description, but by the claims and their equivalents, and all variations within the scope of the claims and their equivalents are to be construed as being included in the disclosure.

## Claims

1. A battery pack comprising:
a cell unit including one or more battery cells;
a cell accommodating member accommodating a plurality of the cell units; and
a housing surrounding at least a portion of an outer periphery of the cell accommodating member,
wherein the cell accommodating member includes,
a first accommodating portion accommodating the cell unit and having one open side, and
a second accommodating portion provided in plural and having the other open side,
wherein the second accommodating portion is disposed between the first accommodating portions adjacent to each other to separate the first accommodating portions from each other.

2. The battery pack of claim 1, wherein the first accommodating portion and the second accommodating portion are formed by bending a single plate member a plurality of times.

3. The battery pack of claim 1, wherein the cell accommodating member comprises a metal material or a thermally conductive plastic.

4. The battery pack of claim 1, further comprising a heat propagation preventing member accommodated in the second accommodating portion and configured to block heat propagation between the plurality of cell units accommodated in the first accommodating portion.

5. The battery pack of claim 4, wherein the heat propagation preventing member comprises at least one of mica, silicate, graphite, or alumina.

6. The battery pack of claim 1, wherein the first accommodating portion has a lower side open and surrounds an upper portion and both sides of the cell unit, and
the second accommodating portion has an upper side open.

7. The battery pack of claim 6, wherein the housing comprises a first housing disposed below the cell accommodating member and a second housing disposed on an upper portion of the cell accommodating member,
wherein a lower surface of the second accommodating portion is fixed to the housing, and
wherein the lower side of the first accommodating portion is closed by the first housing.

8. The battery pack of claim 1, wherein the cell unit comprises a plurality of battery cells stacked in a first direction,
wherein the first direction is perpendicular to a side surface of the first accommodating portion.

9. The battery pack of claim 8, wherein the battery cell comprises a bending portion in which an exterior material is folded and a sealing portion in which the exterior material is sealed,
wherein the bending portion of the battery cell is disposed a lower side of the first accommodating portion.

10. The battery pack of claim 1, further comprising a bus bar assembly disposed on at least one side of the cell unit and electrically connecting the plurality of the cell units to each other.

11. The battery pack of claim 1, further comprising a heat transfer member disposed between the cell unit and the first accommodating portion.

12. The battery pack of claim 1, further comprising a cooling portion disposed in at least one of an inner portion or an outer surface of the housing.

13. The battery pack of claim 8, wherein a width of the first accommodating portion in the first direction is wider than a width of the second accommodating portion in the first direction.

14. A method of manufacturing a battery pack, the method comprising:
preparing a cell unit including one or more battery cells;
preparing a cell accommodating member including a first accommodating portion having one open side and a second accommodating portion having the other open side;
accommodating the cell unit in the first accommodating portion;
covering the first accommodating portion with a first housing;
inverting the cell accommodating member covered by the first housing;
accommodating a heat propagation preventing member in the second accommodating portion;
electrically connecting the cell unit and a bus bar assembly; and
coupling the first housing and a second housing,
wherein the second accommodating portion is disposed between the first accommodating portions adjacent to each other to separate the first accommodating portions from each other.

15. The method of claim 14, wherein the cell accommodating member is formed by bending a single plate in a zigzag shape a plurality of times, and
wherein the first accommodating portion is disposed on one surface of the single plate and the second accommodating portion is disposed on the other surface of the single plate.
